# EUROPÄISCHE PATENTSCHRIFT

(11) **EP 1 170 337 B1**
(45) Veröffentlichungstag und Bekanntmachung des Hinweises auf die Patenterteilung: **30.03.2005**
(21) Anmeldenummer: 01115248.5
(22) Anmeldetag: 23.06.2001
(51) Int. Cl.: C09B 67/22, C09D 11/00

(54) **Farbmittelmischung**
Mixture of dyes
Mélanges de colorants

(30) Priorität: 05.07.2000 DE 10032683
(43) Veröffentlichungstag der Anmeldung: 09.01.2002
(73) Patentinhaber: Clariant GmbH, 65929 Frankfurt am Main (DE)
(72) Erfinder: Menzel, Heidemarie, 65812 Bad Soden (DE); Geisenberger, Josef, Dr., 65843 Sulzbach (DE); Wuzik, Andreas, Dr., 63526 Erlensee (DE)
(74) Vertreter: Hütter, Klaus, Dr.

(56) Entgegenhaltungen:
- EP-A- 0 542 420
- EP-A- 0 559 310
- EP-A- 0 947 563
- EP-A- 1 086 999
- WO-A-01/22127
- US-A- 4 426 205
- DATABASE WPI Section Ch, Week 199915 Derwent Publications Ltd., London, GB; Class E21, AN 1999-175776 XP002253530 & JP 11 029730 A (MITSUBISHI CHEM CORP), 2. Februar 1999 (1999-02-02)

## Beschreibung

Die Erfindung betrifft das Gebiet der Farbmittel, insbesondere zur Verwendung in Aufzeichnungsflüssigkeiten für Schreib- und Aufzeichnungsgeräte, z.B. für Tintenstrahldruck-Verfahren (Ink-Jet Verfahren).

Unter dem Ink-Jet Verfahren versteht man ein Aufzeichnungssystem, bei dem Tintentröpfchen elektronisch kontrolliert aus einer kleinen Düse auf ein Aufzeichnungsmaterial, wie z.B. Papier, gespritzt werden. Die aufgebrachten Tintentröpfchen bleiben dabei auf dem Aufzeichnungsmaterial haften und bilden so die gewünschte Information ab. In der Praxis nutzt man heute zwei Methoden zur Erzeugung und Steuerung der Tintentröpfchen: Das Continuous Stream Verfahren, bei dem der Tintenstrahl permanent abgegeben wird, wobei in Schreibpausen der Tintenstrahl in einen Auffangbehälter abgelenkt und die Tinte rezykliert wird, sowie das Drop-on-demand Prinzip, bei dem nur dann Tröpfchen produziert werden, wenn tatsächlich geschrieben wird. Die Erzeugung der Tröpfchen kann durch kurzzeitige Druckerhöhung in einer Tintenkammer, die mit einer kleinen Düse ausgestattet ist, beispielsweise mittels eines Piezo-Kristalls erfolgen. Außerdem sind auch solche Systeme bekannt, die die Versprühung des Tröpfchens durch Zufuhr von thermischer Energie gewährleisten.

Unabhängig davon, nach welchem Verfahren ein Tintenstrahl-Aufzeichnungssystem arbeitet, werden an die eingesetzte Tinte bestimmte Anforderungen gestellt. So muss die Tintenzusammensetzung sorgfältig abgestimmte physikalische Eigenschaften wie Oberflächenspannung, Viskosität und elektrische Leitfähigkeit aufweisen, um sie für die Generierung der Tröpfchen und die Steuerung ihrer Flugrichtung geeignet zu machen. Wichtig ist auch, dass sich in der Tinte keine Feststoffe bilden dürfen, selbst wenn irgendein Bestandteil der Aufzeichnungsflüssigkeit verdampft oder sich die chemische Zusammensetzung der Tinte während der Lagerung, während der Aufzeichnung oder während einer Aufzeichnungspause ändert. Des weiteren soll das einmal aufgenommene Bild eine hohe Wasserbeständigkeit, Lichtechtheit und Abriebfestigkeit aufweisen (EP-A-0 823 233 und US-A-5 188 664). Die bisher bekannten Tinten, insbesondere die wässrigen Tinten, haben jedoch den Nachteil, dass sie auf dem Aufzeichnungsmaterial leicht verschmieren können, wenn sie angefeuchtet werden. Ein weiterer Nachteil besteht darin, dass die bekannten Tinten durch Licht oder mechanischen Abrieb meist schnell verblassen.

Betrachtet man die Tintenformulierungen beim Mehrfarbendruck, kommt als zusätzliches Problem hinzu, dass die in den Tinten eingesetzten Farbstoffe möglichst genau den drei Primärfarben Gelb, Magenta und Cyan entsprechen müssen. Dabei wird die Auswahl geeigneter Farbstoffe nicht nur durch die benötigte Nuance, sondern auch durch die erforderliche Reinheit des Farbtons und die gewünschte Brillanz der Farbwiedergabe eingeschränkt. Bisher hat man jedoch keine Tintenzusammensetzung entwickeln können, die sämtliche gewünschten Eigenschaften in idealer Weise besitzt und erfolgreich in der Praxis eingesetzt werden kann.
Der Sachverhalt sei am Beispiel von Tinten der Nuance Magenta näher erläutert. In herkömmlichen Tinten auf Basis von wasserlöslichen Magenta-Farbstoffen werden z.B. Direktfarbstoffe, wie C.I. Direct Red 1, 11, 37, 62, 75, 81, 87, 89, 95 und 227, eingesetzt. Aus Direktfarbstoffen hergestellte Tinten besitzen aufgrund der Substantivität der Direktfarbstoffe eine ausgezeichnete Wasserbeständigkeit, bergen aber zwei Nachteile: Durch die geringe Löslichkeit in Wasser kommt es während des kontinuierlichen Druckens oder bei intermittierender Verwendung leicht zur Verstopfung der Düsen durch ausgefallenen Farbstoff. Außerdem wird vermehrt Aggregationsbildung beobachtet, was trübe Nuancen verursacht und so zu unbefriedigender Farbwiedergabe führt.
Andererseits wurde auch die Verwendung saurer Farbstoffe, wie beispielsweise C.I. Acid Red 1, 8, 52, 87, 94, 115, 131, 144, 152, 154, 186 und 245, untersucht, mit dem Ergebnis, dass zwar eine gute Farbwiedergabe erreicht wird, aber die Haltbarkeit der gedruckten Bilder wegen der geringen Licht- und Wasserbeständigkeit unzureichend ist.

Aus der DE-A-3 614 462 und DE-A-3 320 373 sind Aufzeichnungsflüssigkeiten bekannt, die Reaktivfarbstoffe enthalten können. Drucke mit wasserlöslichen Reaktivfarbstoffen vom Chlortriazinyl- oder β-Sulfatoethylsulfonyl-Typ besitzen jedoch meist keine optimale Wasserbeständigkeit, wobei sich die Bildung von Chlorid- oder Sulfat-Ionen durch Hydrolyse der Reaktivgruppen zusätzlich negativ auswirkt.

Neben Farbstoffen können auch hochlichtechte Pigmente als Farbmittel in Ink-Jet Tinten wie z.B. C.I. Pigment Red 122, C.I. Pigment Red 176, C.I. Pigment Red 184, 185 oder C.I. Pigment Red 269 eingesetzt werden. Als nachteilig erwies sich, dass wenig brillante Drucke erhalten wurden.

Es besteht somit ein Bedarf an verbesserten Aufzeichnungsflüssigkeiten, welche den bereits bekannten magentafarbenen Tinten insbesondere in Farbton, in der Lagerstabilität und Wasserbeständigkeit überlegen sind und gleichzeitig die weiteren für den Ink-Jet Bereich geforderten Eigenschaften aufweisen.

Überraschenderweise wurde gefunden, dass die gestellten Anforderungen erfüllt werden können, wenn die nachstehend definierten wasserlöslichen Farbstoffe der Formeln (1) und (2) als Mischungen eingesetzt werden.

Gegenstand der vorliegenden Erfindung ist eine Farbstoffmischung, bestehend im wesentlichen aus C.I. Acid Red 289 der Formel (1) und einer Verbindung der Formel (2) im Gewichtsverhältnis 1 : 100 bis 100 : 1, bezogen auf Trockengewichte, 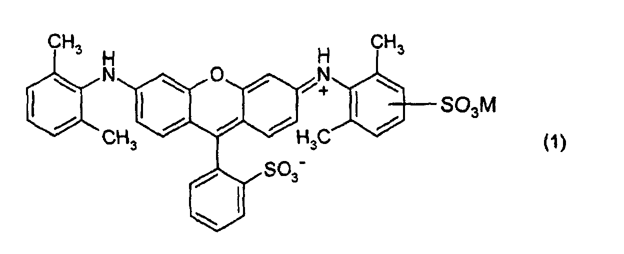 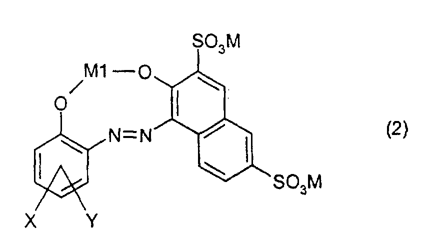 worin
- X: SO₂R¹,
- Y: H, Alkyl, Alkoxy, bevorzugt H, (C₁-C₄)-Alkyl, (C₁-C₄)-Alkoxy;
- R¹: OH, CH=CH₂, CH₂CH₂OR², CH₂CH₂NR³R⁴ und CH₂CH₂SR⁵ bedeutet,
- R²: H, SO₃M, (C₁-C₆)-Alkyl, durch ein oder mehrere, beispielsweise 1, 2 oder 3, Reste aus der Gruppe OH, NH₂, COOM und SO₃M substituiertes (C₁-C₆)-Alkyl;
- R³ und R⁴: unabhängig voneinander H, (C₁-C₆)-Alkyl, durch ein oder mehrere, beispielsweise 1, 2 oder 3, Reste aus der Gruppe OH, NH₂, COOM und SO₃M substituiertes (C₁-C₆) Alkyl, (C₁-C₆)-Acyl, C₆-C₁₀-Aryl oder Halogen substituiertes C₆-C₁₀-Aryl darstellen;
- R⁵: für (C₁-C₆)-Alkyl, durch ein oder mehrere, beispielsweise 1, 2 oder 3, Reste aus der Gruppe OH, NH₂, COOM und SO₃M substituiertes (C₁-C₆)-Alkyl, (C₁-C₆)-Acyl, C₆-C₁₀-Aryl oder Halogen substituiertes C₆-C₁₀-Aryl steht;
- M1: für Cu, Co, Ni, Fe, Cr oder 2/3 Al steht; und
- M: für Wasserstoff, ein einwertiges Metallkation, ein Äquivalent eines mehrwertigen Metallkations oder ein gegebenenfalls mit (C₁-C₄)-Alkyl, (C₁-C₄)-Alkoxyalkyl oder Hydroxy-(C₁-C₄)-alkyl substituiertes Ammoniumion steht.
M steht vorzugsweise für Wasserstoff, Natrium oder Kalium.
M1 steht vorzugsweise für Cu.

Die Verbindung der Formel (2) mit SO₂R¹ in meta-Position zur Azo-Brücke und mit Y gleich H, sowie mit R¹ gleich β-Sulfatoethyl und M1 gleich Cu, ist unter dem Namen C.I. Reactive Red 23 bekannt.

Bevorzugt im Sinne der vorliegenden Erfindung ist eine Mischung aus C.I. Acid Red 289 und C.I. Reactive Red 23.
Bevorzugte Mischungsverhältnisse, bezogen auf Trockengewichte, liegen zwischen 1 : 10 und 10 : 1, insbesondere zwischen 1 : 4 und 4 : 1.

Die erfindungsgemäße Farbstoffmischung kann zusätzlich noch ein Nuancierfarbmittel enthalten, vorzugsweise aus der Gruppe C.I. Direct Red 1, 11, 37, 62, 75, 81, 87, 89, 95, 227; C.I. Acid Red 1, 8, 52, 87, 94, 115, 131, 144, 152, 154, 186, 245 und 249; C.I. Pigment Red 122, 176, 184, 185 und 269. Das Nuancierfarbmittel ist vorzugsweise in einer Menge von 0,001 bis 5 Gew.-%, insbesondere von 0,01 bis 1 Gew.-%, bezogen auf das Trockengewicht der Gesamtmischung, enthalten.

Die erfindungsgemäße Farbstoffmischung kann hergestellt werden, indem man die Farbstoffe der Formeln (1) und (2) und ggf. das Nuancierfarbmittel in den angegebenen Mischungsverhältnissen in Form der trockenen Pulver, ihrer Lösungen, wasser- oder lösemittelfeuchten Presskuchen oder Masterbatch miteinander mischt.

Die Druckschriften WO,A,01/22127; EP,A,947,563; EP,A,1,086,999 sowie JP,A,11,029,730 (siehe auch engl. Zusammenfassung) offenbaren ähnliche Farbstoffkombinationen.

Farbstoffe der Formel (2) können hergestellt werden, wie in der noch unveröffentlichten Deutschen Patentanmeldung 101 06 682.1 beschrieben.

Die Farbstoffe können auch durch das kontinuierliche Mischen von äquivalenten Mengen der Ausgangsprodukte in Form wässrig-saurer oder wässrig-alkalischer Lösungen in z.B. Mischdüsen und Durchflußreaktoren, ggf. mit einer Nachreaktionsphase in einem Reaktionskessel, dargestellt werden.

Gegenstand der vorliegenden Erfindung ist auch die Verwendung der genannten Mischungen zum Färben und Bedrucken von natürlichen und synthetischen Fasermaterialien (z.B. Polyester, Seide, Wolle, Mischgewebe), insbesondere zur Aufzeichnung von Schrift und Bildern auf verschiedenen Aufzeichnungsmedien, sowie zum Färben von Papier oder Zellstoffen in der Masse.

Für den Einsatz in Aufzeichnungsflüssigkeiten werden die beschriebenen Farbstoffe den genannten Anforderungen entsprechend aufbereitet. Die Farbstoffe können aus den zunächst erhaltenen, bevorzugt wässrigen Reaktionsgemischen durch Aussalzen und Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet werden und die Farbstoffe enthaltenden Reaktionsmischungen durch Zusatz von organischen und/oder anorganischen Basen, eventuell Feuchthaltemitteln, Konservierungsmittel und gegebenenfalls nach teilweiser oder vollständiger Entsalzung mittels Membranfiltration direkt in konzentrierte Farbstofflösungen überführt werden. Alternativ können die KomplexFarbstoffe auch als Presskuchen (gegebenenfalls auch in Flush-Verfahren) oder als Pulver eingesetzt werden. Vorteilhafterweise werden die erfindungsgemäßen Farbstoffmischungen in möglichst salzfreier Form, d.h. frei von NaCI oder anderen üblichen anorganischen Salzen, die bei der Synthese der Farbstoffe entstanden sind, eingesetzt.

Für konzentrierte Farbstofflösungen geeignete anorganische Basen sind beispielsweise Lithiumhydroxid, Lithiumcarbonat, Natriumhydroxid, Natriumhydrogencarbonat, Natriumcarbonat, Kaliumhydroxid, Kaliumcarbonat und Ammoniak. Geeignete organische Basen sind beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylaminopropanol, Ethylendiamin, Tetramethylethylendiamin, Tetramethylpropylendiamin, Tetramethylhexylendiamin, Diethylentriamin, Triethylentetramin, Triethylamin, Diisopropylethylamin und Polyethylenimin.

Für konzentrierte Farbstofflösungen geeignete Feuchthaltemittel sind beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Die erfindungsgemäßen Farbstoffmischungen eignen sich besonders zur Herstellung von Aufzeichnungsflüssigkeiten, insbesondere von Tinten auf wässriger und nichtwässriger Basis für das Ink-Jet-Druckverfahren, sowie für solche Tinten, die nach dem Hot-melt Verfahren arbeiten oder auf Mikroemulsionen basieren, aber auch für sonstige Druck-, Vervielfältigungs-, Markierungs-, Schreib-, Zeichen-, Stempel- oder Registrierverfahren.

Gegenstand der vorliegenden Erfindung sind auch Aufzeichnungsflüssigkeiten, die eine erfindungsgemäße Farbstoffmischung und gegebenenfalls andere Farbmittel zum Nuancieren enthalten. Solche Nuancierfarbmittel sind zweckmäßigerweise in einer Menge von 0 bis 20 Gew.-%, vorzugsweise von 0,01 bis 10 Gew.-%, insbesondere von 0,1 bis 5 Gew.-%, bezogen auf das Gesamtgewicht der Aufzeichnungsflüssigkeit, enthalten.
Die Zusammensetzung der Aufzeichnungsflüssigkeit muss dem jeweiligen Verwendungszweck angepasst werden.

Erfindungsgemäße Aufzeichnungsflüssigkeiten enthalten im allgemeinen insgesamt 0,1 bis 50 Gew.-% der besagten Mischung der Farbstoffe (1) und (2) und ggf. der Nuancierfarbmittel, gerechnet als Trockengewicht, 0 bis 99 Gew.-% Wasser und 0,5 bis 99,5 Gew.-% organisches Lösungsmittel und/oder Feuchthaltemittel. In einer bevorzugten Ausführungsform enthalten die Aufzeichnungsflüssigkeiten 0,5 bis 15 Gew.-% der besagten Farbstoffmischung, gerechnet als Trockengewicht, 35 bis 75 Gew.-% Wasser und 10 bis 50 Gew.-% organisches Lösungsmittel und/oder Feuchthaltemittel; in einer anderen bevorzugten Ausführungsform 0,5 bis 15 Gew.-% der besagten Farbstoffmischung, gerechnet als Trockengewicht, 0 bis 20 Gew.-% Wasser und 70 bis 99,5 Gew.-% organisches Lösungsmittel und/oder Feuchthaltemittel.

Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösemitteln und/oder Feuchthaltemitteln kann es sich um ein organisches Lösemittel oder um ein Gemisch derartiger Lösemittel handeln, wobei mit Wasser mischbare Lösemittel bevorzugt sind. Geeignete Lösemittel sind beispielsweise ein- oder mehrwertige Alkohole, deren Ether und Ester, z.B. Methanol, Ethanol, Propanol, Isopropanol, Butanol, Isobutanol; zwei- oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butyl-ether, Triethylenglykol-mono-methyloder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon; ferner Harnstoff, Tetramethylharnstoff, Thiodiglykol, ε-Caprolactam.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit. Des weiteren können Lichtschutzmittel enthalten sein.

Weiterhin können Amine, wie z. B. Ethanolamin, Diethanolamin, Triethanolamin, N,N-Dimethylethanolamin, Diisopropylamin, zur Erhöhung des pH-Wertes der Aufzeichnungsflüssigkeit enthalten sein, normalerweise zu 0 bis 10 Gew.-%, vorzugsweise 0,5 bis 5 Gew.-%, bezogen auf das Gesamtgewicht der Aufzeichnungsflüssigkeit.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z.B. zur Pufferung des pH-Wertes, zur Einstellung der elektrischen Leitfähigkeit, der spezifischen Wärme, des thermischen Expansionskoeffizienten und der Leitfähigkeit, zugesetzt werden.

Bei der Lagerung erfindungsgemäßer Aufzeichnungsflüssigkeiten tritt keine Abscheidung von Niederschlägen auf, welche zu unscharfen Druckbildem oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Licht- und Wasserechtheit.

Desweiteren können die erfindungsgemäßen Magenta-Farbstoffmischungen als Tinten-Set in Kombination mit schwarzen, gelben und/oder cyanfarbenen Aufzeichnungsflüssigkeiten eingesetzt werden. Bei den Gelb- und Cyan-Tönen handelt es sich sowohl um Farbstoffe, wie z.B. die C.I. Farbstoffe Acid Yellow 17, C.I. Acid Yellow 23, C.I. Direct Yellow 86, C.I. Direct Yellow 98, C.I. Direct Yellow 132, C.I. Reactive Yellow 37, C.I. Acid Blue 9, C.I. Direct Blue 199, als auch um Pigmente, wie C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155, C.I. Pigment Yellow 180, C.I. Pigment Violet 19, C.I. Pigment Blue 15, C.I. Pigment Blue 15:3, C.I. Pigment Blue 15:4. Bei den Schwarztönen handelt es sich um C.I. Food Black 1 und 2, C.I. Direct Black 168, C.I. Direct Black 195, C.I. Reactive Black 8, C.I. Reactive Black 31, C.I. Sol.Sulfur Black 1, Carbon Black. Bei den Reaktivfarbstoffen können auch mit Nucleophilen abreagierte Farbstoffe in Tinten-Sets eingesetzt werden.

Weiterhin sind die erfindungsgemäßen Farbstoffmischungen als Farbmittel in elektrophotographischen Tonern und Entwicklern, wie z.B. Einkomponenten- und Zweikomponentenpulvertonern, Magnettonern, Flüssigtonern, Polymerisationstonern sowie anderen Spezialtonern geeignet.

Typische Tonerbindemittel sind Polymerisations-, Polyadditions- und Polykondensationsharze, wie Styrol- Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließmittel, enthalten können oder im Nachhinein zugesetzt bekommen können.
Des weiteren sind erfindungsgemäße Farbstoffmischungen als Farbmittel in Pulver und Pulverlacken geeignet, insbesondere in triboelektrisch oder elektrostatisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze carboxyl- und hydroxylgruppenhaltige Polyesterharze, Polyurethane- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Außerdem sind die erfindungsgemäßen Farbstoffmischungen als Farbmittel für Farbfilter, sowohl für die additive wie für die subtraktive Farberzeugung (P. Gregory "Topics in Applied Chemistry: High Technology Applications of Organic Colorants" Plenum Press, New York 1991, Seite 15-25), sowie als Farbmittel in Electronic Inks für sogenannte "Electronic Newspapers" geeignet.

Auch in den vorstehend beschriebenen Anwendungsgebieten können die Mischungen der Farbstoffe (1) und (2) zusätzlich mit anderen Farbstoffen und/oder Pigmenten nuanciert werden, wie z.B. mit C.I. Direct Red 1, 11, 37, 62, 75, 81, 87, 89, 95 und 227; C.I. Acid Red 1, 8, 52, 87, 94, 115, 131, 144, 152, 154, 186, 245 und 249; C.I. Pigment Red 122, 57:1, 146, 176, 184, 185 und 269.

In den nachstehenden Beispielen wird die Lichtechtheit nach DIN 54003 (blaue Wollskala) bestimmt. Dabei bedeutet 1 sehr gering, 2 gering, 3 mäßig, 4 ziemlich gut, 5 gut, 6 sehr gut.

### Beispiel 1:

Herstellung des Farbstoffs (2):

### a) Diazotierung der Aminkomponente (3)

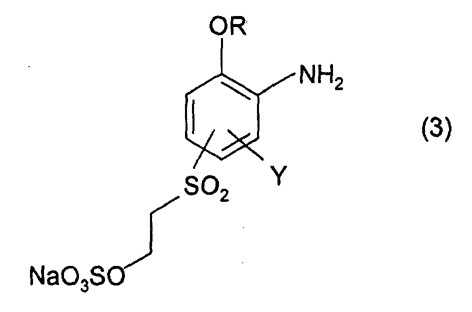

16,67 g (0,05mol) der Aminkomponente (3) (R = Methyl; Y = Wasserstoff) werden in 20 ml 10 N Salzsäure eingetragen, mit 20 ml salzfreiem Wasser versetzt und 30 min gerührt. Anschließend stellt man mit 20 g Eis die Temperatur auf 0-5°C ein und gibt innerhalb von 1,5 Stunden 3,62 g Natriumnitrit zu und rührt für 3 Stunden bei 5-8°C. Der Überschuss an Nitrit wird mit Amidosulfonsäure entfernt.

### b) Kupplung zum Monoazofarbstoff (5)

17,41 g (0,05 mol) der Kupplungskomponente (4) 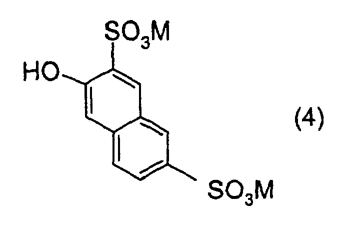 (M = Na) werden in 60 ml salzfreiem Wasser angerührt, mit 10 N Natronlauge auf pH 6-9 gestellt und mit 25 g Eis versetzt. Zu dieser Lösung wird die unter a) hergestellte Reaktionsmischung zugetropft, der pH-Wert mit Soda gehalten und solange gerührt, bis die Umsetzung quantitativ erfolgt ist (DC-Kontrolle).
Alternativ kann der Kupplungsbaustein auch zur Diazolösung getropft, bzw. die beiden Reaktionspartner kontinuierlich in den erforderlichen Molverhältnissen zusammengemischt werden.

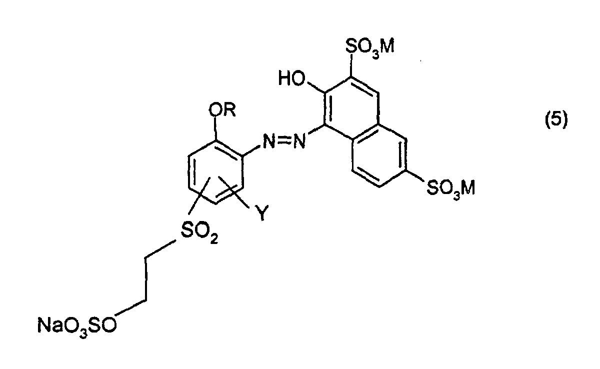

### c) Entmethylierende Kupferung

Die in b) erhaltene Farbstofflösung wird mit 10 N Salzsäure auf pH 3-5 eingestellt, mit 12,98 g (0,052 mol) Kupfersulfat x 5H₂O und mit 11,3 g Natriumacetat versetzt und bei 95°C 48 Stunden gerührt. Nach Abkühlen auf Raumtemperatur wird die Reaktionslösung mit Na-Thiosulfat x 5H₂O versetzt und 4 Stunden bei 90°C gerührt. Abschließend wird die Farbstofflösung filtriert.

Alternativ kann die Metallierung auch in einem Druckreaktor oder nach dem in Beispiel 2d) beschriebenen Verfahren erfolgen.

### d) Umsetzung mit Taurin

18,78 g (0,15 mol) Taurin werden in 50 ml entsalztem Wasser gelöst zur Farbstofflösung gegeben. Dann stellt man den pH mit 10 N Natronlauge auf 9-10, erhitzt auf 60°C für 30 min und erhält so den Farbstoff (2) in gelöster Form.

### Beispiel 2

Herstellung des Farbstoffs (2) nach alternativem Verfahren:

### a) Reaktion des Amins (3) mit Taurin

16,67 g (0,05 mol) der Aminkomponente (3) mit R = Methyl und Y = H, werden in 50 ml entsalztem Wasser gelöst und bei pH 8,5-10 mit 6,88 g (0,055 mol) Taurin versetzt. Die Temperatur wird für 1 Stunde auf 60°C angehoben.

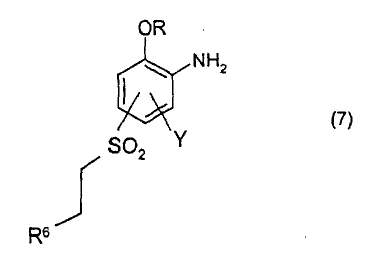

### b) Diazotierung der Aminkomponente (7)

Zu der unter a) erhaltenen Reaktionslösung werden 25 ml 10 N Salzsäure und 20 ml Wasser gegeben. Nach 30-minütigem Rühren wird durch Zugabe von 25 g Eis auf 0-5°C gekühlt und innerhalb von 1,5 Stunden 3,62 g Natriumnitrit zugegeben. Man rührt für 3 Stunden bei 5-8°C und entfernt dann den Überschuss Nitrit mit Amidosulfonsäure.

### c) Kupplung zum Monoazofarbstoff (8)

17,41 g (0,05 mol) der Kupplungskomponente (4) (M = Na) werden in 60 ml salzfreiem Wasser angerührt und mit 10 N Natronlauge auf pH 6-9 gestellt und mit 25 g Eis versetzt. Zu dieser Lösung wird die unter b) hergestellte Reaktionsmischung zugetropft, der pH-Wert mit Soda gehalten und solange gerührt, bis die Umsetzung vollständig erfolgt ist (DC-Kontrolle).
Alternativ kann die Kupplungskomponente auch zur Diazoniumsalzlösung getropft werden.

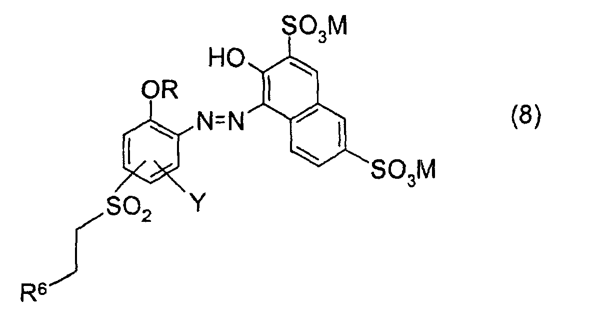

### d) Entmethylierende Kupferung

12,98 g (0,052 mol) Kupfersulfat x 5H₂O werden in 20 ml entsalztem Wasser gelöst, mit 20,8 ml Ammoniak (25 %-ig) versetzt und für 10 min auf 60°C erhitzt. Zu der aus c) erhaltenen Farbstofflösung gibt man 12,3 g (0,117 mol) Diethanolamin (99 %-ig) und fügt dann die Kupferkomplexlösung zu. Anschließend wird bei pH 9-10 für 3 Stunden auf 90°C erhitzt und der Umsatz mit DC kontrolliert. Das überschüssige ionogene Kupfer wird durch Zugabe von Na-Thiosulfat x 5H₂O und Erhitzen auf 90°C für 4 Stunden durch abschließende Filtration entfernt.

### Beispiel 3

### Herstellung einer Aufzeichnungsflüssigkeit

Man stellt jeweils eine 10 gew.-%ige salzfreie wässrige Lösung von C.I. Reactive Red 23 und Acid Red 289 her. Anschließend werden bei Raumtemperatur 1500 ml der Reactive Red 23-Lösung mit 498 ml der Acid Red 289-Lösung gemischt. Zusätzlich werden zum Nuancieren 2 ml einer 1 gew.%-igen C.I. Acid Red 52 - Lösung untergerührt. Die so erhaltene Farbstofflösung wird mit 4 g ®Proxel GXL konserviert.
Absorptionsspektrum in Wasser: λₘₐₓ = 524 nm;
Lichtechtheit: 5 (blaue Wollskala);
Lagerstabilitätstest: keine Feststoffpartikel nach 4 Wochen bei 50°C sowie 10 Tage bei -20°C;
Oberflächenspannung: >50 mN/m (5 %ige wässrige Tinte).

### Beispiel 4:

### Herstellung einer Aufzeichnungsflüssigkeit

Man mischt 2000 ml einer 10 gew.-%igen salzfreien Lösung von C.I. Reactive Red 23 mit 498 ml einer ebenfalls entsalzten 10 gew.-%igen Lösung von C.I. Acid Red 289. Als Nuancierkomponente werden 2 ml einer 1 gew.-%igen C.I. Reactive Red 180 -Lösung beigemengt. Zur Konservierung der Farblösung werden 0,2 Vol-% ®Mergal K10 N zugesetzt.
Lichtechtheit: 5;
Lagerstabilität: keine Feststoffpartikel nach 4 Wochen bei 50°C sowie 10 Tage bei -20°C.

### Beispiel 5:

### Herstellung einer Aufzeichnungsflüssigkeit

Zu 1000 ml einer 10 gew.-%igen salzfreien Lösung eines Reactive Red 23-Derivates der Formel (2), worin R¹ die Bedeutung CH₂CH₂NHCH₂CH₂SO₃M hat, gibt man 498 ml einer ebenfalls entsalzten 10 gew.-%igen Lösung von C.I. Acid Red 289. Der pH-Wert der Lösung wird auf 3,5 - 4,5 eingestellt. Die Farbstofflösung wird mit 4 g Proxel GXL konserviert.
Lichtechtheit: 5;
Lagerstabilität: keine Feststoffpartikel nach 4 Wochen bei 50°C sowie 10 Tage bei -20°C.

### Beispiel 6

Beispiel für die Herstellung einer Aufzeichnungsflüssigkeit von 2,5 Gew.-% Reinfarbstoffgehalt:
2,5 g entsalzter Reinfarbstoff, erhalten durch Trocknen der gemäß Beispiel 1 d hergestellten Farbstofflösung, werden unter Rühren bei 25°C in ein Gemisch von 20,0 g Diethylenglykol, 2,5 g N-Methylpyrrolidon, 1,0 g Triethanolamin und 76,5 g entsalztes Wasser eingetragen und gelöst.

Die so hergestellte Tinte liefert brillante magentafarbene Druckbilder mit sehr guter Lichtechtheit.

| | |
|---|---|
| Lichtechtheit | 5 (blaue Wollskala) |
| UV-VIS | λₘₐₓ = 531 nm |

## Patentansprüche

1. Farbstoffmischung, bestehend im wesentlichen aus C.I. Acid Red 289 der Formel (1) und einer Verbindung der Formel (2) im Gewichtsverhältnis 1 : 100 bis 100 : 1 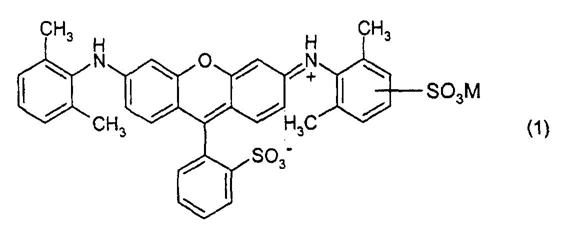 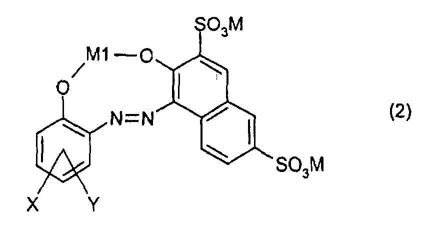 worin
X SO₂R¹,
Y H, Alkyl, Alkoxy,
R¹ OH, CH=CH₂, CH₂CH₂OR², CH₂CH₂NR³R⁴ und CH₂CH₂SR⁵ bedeutet,
R² H, SO₃M, (C₁-C₆)-Alkyl, durch ein oder mehrere Reste aus der Gruppe OH, NH₂, COOM und SO₃M substituiertes (C₁-C₆)-Alkyl;
R³ und R⁴ unabhängig voneinander H, (C₁-C₆)-Alkyl, durch ein oder mehrere, Reste aus der Gruppe OH, NH₂, COOM und SO₃M substituiertes (C₁-C₆)-Alkyl, (C₁-C₆)-Acyl, C₆-C₁₀-Aryl oder Halogen substituiertes C₆-C₁₀-Aryl;
R⁵ für (C₁-C₆)-Alkyl, durch ein oder mehrere Reste aus der Gruppe OH, NH₂, COOM und SO₃M substituiertes (C₁-C₆) Alkyl, (C₁-C₆)-Acyl, C₆-C₁₀-Aryl oder durch Halogen substituiertes C₆-C₁₀-Aryl steht;
M1 für Cu, Co, Ni, Fe, Cr oder 2/3 Al steht; und
M für Wasserstoff, ein einwertiges Metall-Kation, ein Äquivalent eines mehrwertigen Metall-Kations oder ein gegebenenfalls mit (C₁-C₄)-Alkyl, (C₁-C₄)-Alkoxyalkyl oder Hydroxy-(C₁-C₄)-alkyl substituiertes Ammoniumion steht.

2. Farbstoffmischung nach Anspruch 1, **dadurch gekennzeichnet, dass** das Mischungsverhältnis zwischen 1 : 10 und 10 : 1 liegt.

3. Farbstoffmischung nach Anspruch 1 oder 2, **dadurch gekennzeichnet, dass** R¹ die Bedeutung β-Sulfatoethyl und M1 die Bedeutung Cu hat.

4. Farbstoffmischung nach mindestens einem der Ansprüche 1 bis 3, **dadurch gekennzeichnet, dass** ein Nuancierfarbmittel aus der Gruppe C.I. Direct Red 1, 11, 37, 62, 75, 81, 87, 89, 95, 227; C.I. Acid Red 1, 8, 52, 87, 94, 115, 131, 144, 152, 154, 186, 245, 249; C.I. Pigment Red 122, 176, 184, 185 und 269 enthalten ist.

5. Farbstoffmischung nach Anspruch 4, **dadurch gekennzeichnet, dass** das Nuancierfarbmittel in einer Menge von 0,001 bis 5 Gew.-%, vorzugsweise von 0,01 bis 1 Gew.-%, bezogen auf das Gesamtgewicht der trockenen Farbstoffmischung, enthalten ist.

6. Verfahren zur Herstellung einer Farbstoffmischung nach einem oder mehreren der Ansprüche 1 bis 5, **dadurch gekennzeichnet, dass** die Farbstoffe der Formeln (1) und (2) und ggf. das Nuancierfarbmittel in Pulverform, in gelöster Form, in Form eines wasser- oder lösemittelfeuchten Presskuchens oder in Form eines Masterbatches miteinander vermischt werden.

7. Verwendung einer Farbstoffmischung nach einem oder mehreren der Ansprüche 1 bis 5 zum Färben und Bedrucken von natürlichen und synthetischen Fasermaterialien, zur Aufzeichnung von Schrift und Bildern auf einem Aufzeichnungsmedium, sowie zum Färben von Papier oder Zellstoffen in der Masse.

8. Verwendung nach Anspruch 7 als Farbmittel zur Herstellung von elektrophotographischen Tonern und Entwicklern sowie von Tinten, insbesondere Ink-Jet-Tinten.

9. Aufzeichnungsflüssigkeit, enthaltend eine Farbstoffmischung gemäß einem oder mehreren der Ansprüche 1 bis 5.

10. Aufzeichnungsflüssigkeit nach Anspruch 9, enthaltend im wesentlichen 0,1 bis 50 Gew.-% der Farbstoffmischung gemäß mindestens einem der Ansprüche 1 bis 5 sowie 0 bis 99 Gew.-% Wasser und 0,5 bis 99,5 Gew.-% organisches Lösemittel und/oder Feuchthaltemittel.

11. Aufzeichnungsflüssigkeit nach Anspruch 9 oder 10, **dadurch gekennzeichnet, dass** ein Nuancierfarbmittel aus der Gruppe C.I. Direct Red 1, 11, 37, 62, 75, 81, 87, 89, 95, 227; C.I. Acid Red 1, 8, 52, 87, 94, 115, 131, 144, 152, 154, 186, 245, 249; C.I. Pigment Red 122, 176, 184, 185 und 269 enthalten ist.

12. Aufzeichnungsflüssigkeit nach Anspruch 11, **dadurch gekennzeichnet, dass** das Nuancierfarbmittel in einer Menge von 0,01 bis 10 Gew.-%, vorzugsweise von 0,1 bis 5 Gew.-%, bezogen auf das Gesamtgewicht der Aufzeichnungsflüssigkeit, enthalten ist.

13. Aufzeichnungsflüssigkeit nach einem oder mehreren der Ansprüche 9 bis 12, enthaltend im wesentlichen 0,5 bis 15 Gew.-% der Farbstoffmischung und ggf. des Nuancierfarbmittels, 35 bis 75 Gew.-% Wasser und 10 bis 50 Gew.-% organisches Lösemittel und/oder Feuchthaltemittel.

14. Aufzeichnungsflüssigkeit nach einem oder mehreren der Ansprüche 9 bis 12, enthaltend im wesentlichen 0,5 bis 15 Gew.-% der Farbstoffmischung und ggf. des Nuancierfarbmittels, 0 bis 20 Gew.-% Wasser und 70 bis 99,5 Gew.-% organisches Lösemittel und/oder Feuchthaltemittel.

15. Aufzeichnungsflüssigkeit nach mindestens einem der Ansprüche 9 bis 14, **dadurch gekennzeichnet, dass** die Farbstoffmischung in entsalzter Form eingesetzt wird.

16. Tintenset, bestehend aus einer magentafarbenen Aufzeichnungsflüssigkeit nach einem oder mehreren der Ansprüche 9 bis 15, einer schwarzen Aufzeichnungsflüssigkeit, einer gelben Aufzeichnungsflüssigkeit und/oder einer cyanfarbenen Aufzeichnungsflüssigkeit.

## Claims

1. A dye mixture consisting essentially of C.I. Acid Red 289 of the formula (1) and a compound of the formula (2) in a weight ratio of 1 : 100 to 100 : 1 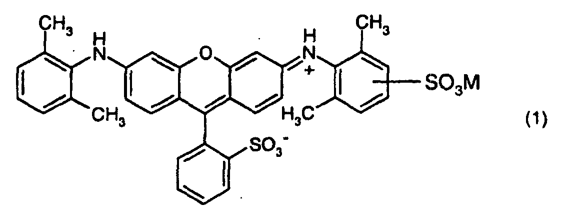 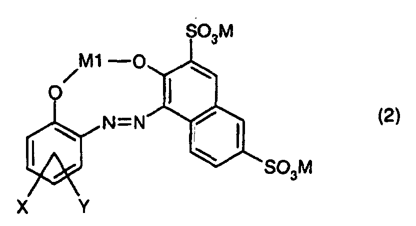 where
X is SO₂R¹,
Y is H, alkyl, alkoxy,
R¹ is OH, CH=CH₂, CH₂CH₂OR², CH₂CH₂NR³R⁴ and CH₂CH₂SR⁵,
R² is H, SO₃M or (C₁-C₆)-alkyl, which may be substituted by one or more substituents selected from the group consisting of OH, NH₂, COOM and SO₃M;
R³ and R⁴ are independently H, (C₁-C₆)-alkyl, which may be substituted by one or more substituents selected from the group consisting of OH, NH₂, COOM and SO₃M, (C₁-C₆)-acyl, C₆-C₁₀-aryl or halogen-substituted C₆-C₁₀-aryl;
R⁵ is (C₁-C₆)-alkyl, which may be substituted by one or more substituents selected from the group consisting of OH, NH₂, COOM and SO₃M, (C₁-C₆)-acyl, C₆-C₁₀-aryl or halogen-substituted C₆-C₁₀-aryl;
M1 is Cu, Co, Ni, Fe, Cr or 2/3 Al; and
M is hydrogen, a monovalent metal cation, one equivalent of a polyvalent metal cation or an ammonium ion which may be substituted by (C₁-C₄)-alkyl,
(C₁-C₄)-alkoxyalkyl or hydroxy-(C₁-C₄)-alkyl.

2. A dye mixture as claimed in claim 1, wherein the mixing ratio is between 1 : 10 and 10 : 1.

3. A dye mixture as claimed in claim 1 or 2, wherein R¹ is β-sulfatoethyl and M1 is Cu.

4. A dye mixture as claimed in at least one of claims 1 to 3, containing a shading colorant selected from the group consisting of C.I. Direct Red 1, 11, 37, 62, 75, 81, 87, 89, 95, 227; C.I. Acid Red 1, 8, 52, 87, 94, 115, 131, 144, 152, 154, 186, 245, 249; C.I. Pigment Red 122, 176, 184, 185 and 269.

5. A dye mixture as claimed in claim 4, wherein the shading colorant is present in an amount of 0.001 to 5% by weight, preferably 0.01 to 1 % by weight, based on the total weight of the dry dye mixture.

6. A process for preparing a dye mixture as claimed in one or more of claims 1 to 5, which comprises the dyes of the formulae (1) and (2) and optionally the shading colorant being mixed with each other in powder form, in dissolved form, in the form of a water- or solvent-moist presscake or in the form of a masterbatch.

7. The use of a dye mixture as claimed in one or more of claims 1 to 5 for dyeing and printing natural and synthetic fiber materials especially for recording script and images on various recording media, and also for coloring paper or celluloses in the pulp.

8. The use of claim 7 as a colorant for preparing electrophotographic toners and developers and also inks, especially ink-jet inks.

9. A recording fluid containing a dye mixture as claimed in one or more of claims 1 to 5.

10. A recording fluid as claimed in claim 9, containing essentially 0.1 to 50% by weight of the dye mixture of at least one of claims 1 to 5 and also 0 to 99% by weight of water and 0.5 to 99.5% by weight of organic solvent and/or humectant.

11. A recording fluid as claimed in claim 9 or 10, containing a shading colorant selected from the group consisting of C.I. Direct Red 1, 11, 37, 62, 75, 81, 87, 89, 95, 227; C.I. Acid Red 1, 8, 52, 87, 94, 115, 131, 144, 152, 154, 186, 245, 249; C.I. Pigment Red 122, 176, 184, 185 and 269.

12. A recording fluid as claimed in claim 11, wherein the shading colorant is present in an amount of 0.01 to 10% by weight, preferably 0.1 to 5% by weight, based on the total weight of the recording fluid.

13. A recording fluid as claimed in one or more of claims 9 to 12, containing essentially 0.5 to 15% by weight of the dye mixture and, if used, of the shading colorant, 35 to 75% by weight of water and 10 to 50% by weight of organic solvent and/or humectant.

14. A recording fluid as claimed in one or more of claims 9 to 12, containing essentially 0.5 to 15% by weight of the dye mixture and, if used, of the shading colorant, 0 to 20% by weight of water and 70 to 99.5% by weight of organic solvent and/or humectant.

15. A recording fluid as claimed in at least one of claims 9 to 14, wherein the dye mixture is used in desalted form.

16. An ink set comprising a magenta recording fluid as claimed in one or more of claims 9 to 15, a black recording fluid, a yellow recording fluid and/or a cyan recording fluid.

## Revendications

1. Mélange de colorants, constitué essentiellement de C.I. Acid Red 289 de formule (1) et d'un composé de formule (2) dans le rapport en poids 1:100 à 100:1 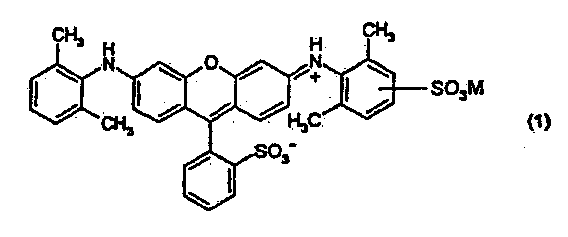 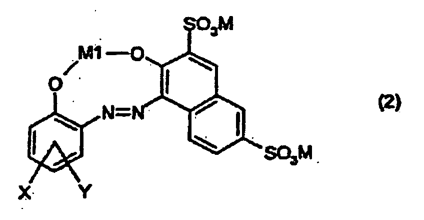 dans lesquels
X représente SO₂R¹,
Y représente H, un alkyle, alcoxy,
R¹ représente OH, CH=CH₂, CH₂CH₂OR², CH₂CH₂NR³R⁴ et CH₂CH₂SR⁵,
R² représente H, SO₃M, un alkyle en C₁ à C₆, alkyle en C₁ à C₆ substitué par un ou plusieurs radicaux du groupe OH, NH₂, COOM et SO₃M ;
R³ et R⁴ représentent indépendamment l'un de l'autre H, un alkyle en C₁ à C₆, alkyle en C₁ à C₆ substitué par un ou plusieurs radicaux du groupe OH, NH₂, COOM et SO₃M, acyle en C₁ à C₆, aryle en C₆ à C₁₀ ou aryle en C₆ à C₁₀ substitué par un halogène ;
R⁵ représente un alkyle en C₁ à C₆, alkyle en C₁ à C₆ substitué par un ou plusieurs radicaux du groupe OH, NH₂, COOM et SO₃M, acyle en C₁ à C₆, aryle en C₆ à C₁₀ ou aryle en C₆ à C₁₀ substitué par un halogène ;
Ml représente Cu, Co, Ni, Fe, Cr ou 2/3 Al ; et
M représente un hydrogène, un cation métallique monovalent, un équivalent d'un cation métallique multivalent ou un ion ammonium éventuellement substitué par un alkyle en C₁ à C₄, alcoxyalkyle en C₁ à C₄ ou hydroxy-alkyle en C₁ à C₄.

2. Mélange de colorants selon la revendication 1, **caractérisé en ce que** le rapport de mélange se situe entre 1:10 et 10:1.

3. Mélange de colorants selon la revendication 1 ou 2, **caractérisé en ce que** R¹ représente le β-sulfatoéthyle et M1 représente Cu.

4. Mélange de colorants selon au moins l'une des revendications 1 à 3, **caractérisé en ce qu'**il contient un colorant de nuancier du groupe C.I. Direct Red 1, 11, 37, 62, 75, 81, 87, 89, 95, 227 ; C.I. Acid Red 1, 8, 52, 87, 94, 115, 131, 144, 152, 154, 186, 245, 249 ; C.I. Pigment Red 122, 176, 184, 185 et 269.

5. Mélange de colorants selon la revendication 4, **caractérisé en ce que** le colorant de nuançage est contenu en une quantité de 0,001 à 5 % en poids, de préférence de 0,01 à 1 % en poids, par rapport au poids total du mélange de colorants sec.

6. Procédé pour la préparation d'un mélange de colorants selon une ou plusieurs des revendications 1 à 5, **caractérisé en ce qu'**on mélange les colorants des formules (1) et (2) et éventuellement le colorant de nuançage sous forme de poudre, sous forme dissoute, sous forme d'un gâteau de filtre-presse humide d'eau ou de solvant ou sous forme d'un lot maître.

7. Utilisation d'un mélange de colorants selon une ou plusieurs des revendications 1 à 5 pour la teinture et l'impression de matériaux fibreux naturels et synthétiques, pour l'impression de caractères et d'illustrations sur un milieu d'enregistrement, ainsi que pour la teinture dans la masse de papier ou de pâtes de cellulose.

8. Utilisation selon la revendication 7 comme colorant pour la préparation de toners et de révélateurs électrophotographiques ainsi que d'encres, en particulier d'encres pour impression par jet d'encre.

9. Liquide d'enregistrement, contenant un mélange de colorants selon une ou plusieurs des revendications 1 à 5.

10. Liquide d'enregistrement selon la revendication 9, contenant essentiellement de 0,1 à 50 % en poids du mélange de colorants selon au moins l'une des revendications 1 à 5 ainsi que de 0 à 99 % en poids d'eau et de 0,5 à 99,5 % en poids de solvant organique et/ou d'agent humidifiant.

11. Liquide d'enregistrement selon la revendication 9 ou 10, **caractérisé en ce qu'**il contient un colorant de nuançage du groupe C.I. Direct Red 1, 11, 37, 62, 75, 81, 87, 89, 95, 227 C.I. Acid Red 1, 8, 52, 87, 94, 115, 131, 144, 152, 154, 186, 245, 249 ; C.I. Pigment Red 122, 176, 184, 185 et 269.

12. Liquide d'enregistrement selon la revendication 11, **caractérisé en ce que** le colorant de nuançage est contenu en une quantité de 0,01 à 10 % en poids, de préférence de 0,1 à 5 % en poids, par rapport au poids total du liquide d'enregistrement.

13. Liquide d'enregistrement selon une ou plusieurs des revendications 9 à 12, contenant essentiellement de 0,5 à 15 % en poids du mélange de colorants et éventuellement du colorant de nuançage, de 35 à 75 % en poids d'eau et de 10 à 50 % en poids de solvant organique et/ou d'un agent humidifiant.

14. Liquide d'enregistrement selon une ou plusieurs des revendications 9 à 12, contenant essentiellement de 0,5 à 15 % en poids du mélange de colorants et éventuellement du colorant de nuançage, de 0 à 20 % en poids d'eau et de 70 à 99,5 % en poids de solvant organique et/ou d'agent humidifiant.

15. Liquide d'enregistrement selon au moins l'une des revendications 9 à 14, **caractérisé en ce qu'**on utilise le mélange de colorants sous forme déminéralisée.

16. Système d'encre, constitué d'un liquide d'enregistrement de couleur magenta selon une ou plusieurs des revendications 9 à 15, d'un liquide d'enregistrement noir, d'un liquide d'enregistrement jaune et/ou d'un liquide d'enregistrement de couleur cyan.
